# EUROPEAN PATENT APPLICATION

(11) **EP 4 848 574 A1**
(43) Date of publication of application: **02.12.2026**
(21) Application number: 25745039.5
(22) Date of filing: 20.01.2025
(51) Int. Cl.: H02P 8/38, B25J 19/06

(54) **HOLDING DEVICE AND CONTROL METHOD**

(30) Priority: 24.01.2024 JP 2024008782
(71) Applicant: Minebea Mitsumi Inc., Kitasaku-gun, Nagano 389-0293 (JP)
(72) Inventor: UNO, Juichi, Kitasaku-gun, Nagano 389-0293 (JP); NAKAZAWA, Kazuaki, Kitasaku-gun, Nagano 389-0293 (JP)
(74) Representative: Winter, Brandl - Partnerschaft mbB
(86) International application number: PCT/JP2025/001620
(87) International publication number: WO 2025/159055

(57) **Abstract**

To prevent a grasped target object from falling off. A grasping apparatus (1) includes a grasping part (7) that grasps a target object (200), a drive mechanism (6) that drives the grasping part (7) according to a rotational force of a motor (5) and includes a self-locking function of restricting movement of the grasping part (7) with energization of the motor 5 stopped, and a motor drive control device (2) that drives the motor (5). When a drive command signal (Sc) including information instructing drive of the grasping part (7) is input, the motor drive control device (2) drives the motor (5) so that the grasping part (7) grasps the target object (200), and when a step-out of the motor (5) is detected, the motor drive control device (2) supplies, to the motor (5), a current smaller than a current supplied to the motor (5) before the detection of the step-out, to fix a rotor (50) of the motor (5).

## Description

### Technical Field

The present invention relates to a grasping apparatus and a control method.

### Background Art

auf Vollständigkeit gegenüber der PCT Anmeldun

At a manufacturing site and the like, a grasping apparatus such as an electric gripper grasping a target object (a workpiece) such as a mechanical component and an electronic component is used. In general, an electric gripper includes a grasping part grasping a target object, a motor, and a drive mechanism driving the grasping part in accordance with a rotational force of the motor.

In recent years, there has been an increase in the number of electric grippers including a drive mechanism having a self-locking function. The self-locking function is a function of restricting movement of the grasping part with energization of the motor stopped (see Patent Document 1).

### Citation List

### Patent Literature

Patent Document 1: JP 2020-104188 A

### Summary of Invention

### Technical Problem

However, in a conventional electric gripper, a force for grasping the target object by the self-locking function decreases over time, and the target object may fall from the grasping part.

The present invention has been made in view of the above-described problem, and an object of the present invention is to prevent a grasped target object from falling.

### Solution to Problem

A grasping apparatus according to a representative embodiment of the present invention includes a motor, a grasping part configured to grasp a target object, a drive mechanism configured to drive the grasping part in accordance with a rotational force of the motor and including a self-locking function of restricting a movement of the grasping part with energization of the motor stopped, and a motor drive control device configured to drive the motor. The motor drive control device includes a drive circuit configured to drive the motor by supplying a current to the motor, based on a drive control signal, and a control circuit configured to generate the drive control signal, based on a drive command signal; the control circuit includes a drive control signal generation unit configured to generate the drive control signal, and a step-out detection unit configured to detect a step-out of the motor; and when the drive command signal including information instructing drive of the grasping part is input, the drive control signal generation unit generates the drive control signal for driving the grasping part, to cause the grasping part to grasp the target object, and when the step-out detection unit detects the step-out of the motor, the drive control signal generation unit generates the drive control signal for supplying, to the motor, a current smaller than a current supplied to the motor before the detection of the step-out, to fix a rotor of the motor.

### Advantageous Effects of Invention

According to the grasping apparatus of the present disclosure, it is possible to prevent the grasped target object from falling off.

### Brief Description of Drawings

FIG. 1 is a diagram schematically illustrating a configuration of a grasping apparatus according to an embodiment.
FIG. 2 is a diagram schematically illustrating a configuration of a motor and a motor drive control device in the grasping apparatus according to the embodiment.
FIG. 3 is a block diagram illustrating a configuration of a control circuit in the grasping apparatus according to the embodiment.
FIG. 4 is a diagram illustrating an equivalent circuit in a periphery of the motor when a rotor of the motor is fixed.
FIG. 5 is a flowchart illustrating a processing flow by the motor drive control device when the grasping apparatus grasps a target object in the embodiment.
FIG. 6 is a flowchart illustrating a processing flow by the motor drive control device after the grasping apparatus grasps a target object in the embodiment.

### Description of Embodiments

Specific examples of embodiments of the present invention will be described below with reference to the drawings. In the following description, components common to the respective embodiments are denoted by the same reference signs, and repeated descriptions are omitted. The drawings are schematic drawings and the dimensional relationships, proportions, and the like between elements in the drawings may differ from reality. Some of the parts may be different in dimensional relationship and ratio in different drawings.

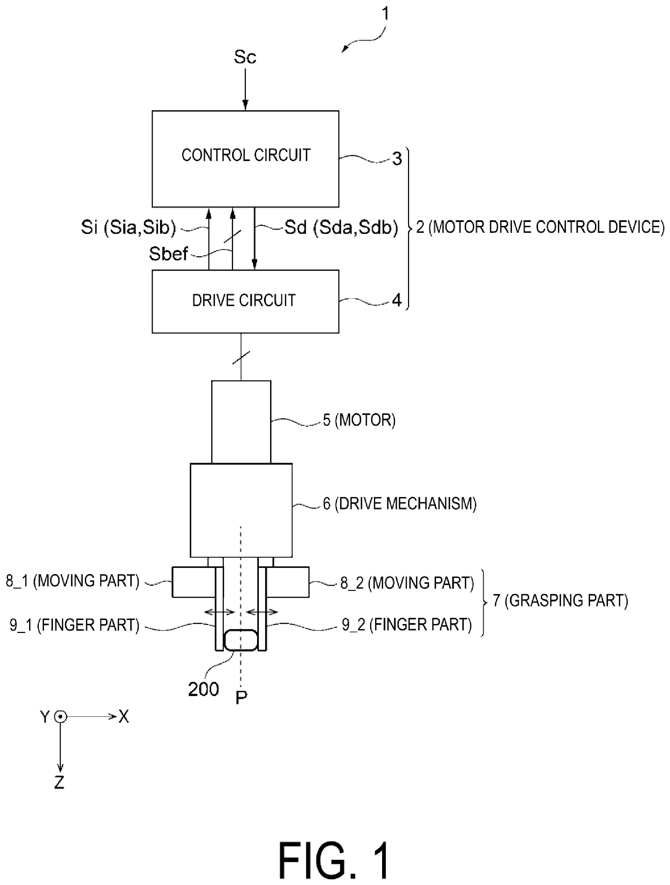

FIG. 1 is a diagram schematically illustrating a configuration of a grasping apparatus 1 according to an embodiment.

FIG. 1 illustrates, as an example, a case where a three-dimensional coordinate system (an XYZ orthogonal coordinate system) including an X-axis, a Y-axis, and a Z-axis orthogonal to each other is set and the grasping apparatus 1 is arranged in the three-dimensional coordinate system. Note that, regarding the Y-axis being a coordinate axis perpendicular to a paper plane in the drawings, when a black round mark is indicated within a circle of the coordinate axis, it is indicated that the front side with respect to the paper plane is the positive direction. In FIG. 1, an X-axis direction is a direction of a grasping part 7 described later moving to grasp or release a target object 200.

For example, the grasping apparatus 1 is an apparatus used for grasping a workpiece such as a mechanical component and an electronic component as a target object, and conveying the workpiece to attach the workpiece at a desired position, and is a so-called electric gripper. Specifically, the grasping apparatus 1 grasps the target object 200 between a finger part 9_1 and a finger part 9_2 described later.

As illustrated in FIG. 1, the grasping apparatus 1 includes the grasping part 7, a drive mechanism 6, a motor 5, and a motor drive control device 2.

The grasping part 7 is a mechanism for grasping the target object 200. The grasping part 7 is formed to be operable by using the rotational force of the motor 5 as motive force. For example, the grasping part 7 includes moving parts 8_1 and 8_2 and the finger parts 9_1 and 9_2. The moving parts 8_1 and 8_2 are coupled to the drive mechanism 6 described later, and are formed to be relatively movable in the X-axis direction by the drive mechanism 6. That is, the moving part 8_1 and the moving part 8_2 move in opposite directions in the X-axis direction.

The finger parts 9_1 and 9_2 grasp or release the target object 200 by the movement of the moving parts 8_1 and 8_2. The finger parts 9_1 and 9_2 are arranged so as to protrude from the moving parts 8_1 and 8_2 to the positive side in the Z-axis direction. The finger parts 9_1 and 9_2 are formed in a plate-like shape, for example.

One end side of the finger part 9_1 is fixed to the moving part 8_1 by a holding mechanism (for example, a screw or the like) (not illustrated), and one end side of the finger part 9_2 is fixed to the moving part 8_2 by a holding mechanism (for example, a screw or the like) (not illustrated). The finger parts 9_1 and 9_2 move in the X-direction by the movement of the moving parts 8_1 and 8_2 in the X-direction, and thus, grasp or release the target object 200 on the other end side of the finger parts 9_1 and 9_2, respectively. The details of this configuration will be described later.

Note that, in FIG. 1, a position serving as a reference when the grasping apparatus 1 grasps the target object 200 is defined as a center position P.

The motor 5 is a motive power source for driving the grasping part 7. The motor 5 is a stepping motor, for example. As described later, the motor drive control device 2 supplies electric power to the motor 5 to operate the motor 5. In the present embodiment, as an example, the motor 5 is assumed to be a two-phase stepping motor having coils of an A-phase and a B-phase. Note that the configuration of the motor 5 will be described in detail later.

The drive mechanism 6 is a mechanism transmitting the rotational force of the motor 5 to the grasping part 7 to drive the grasping part 7. For example, the drive mechanism 6 is formed by combining mechanical components (not illustrated) such as a gear, a worm gear, and a cam. The drive mechanism 6 is connected between the output shaft of the motor 5 and the moving parts 8_1 and 8_2 of the grasping part 7. The drive mechanism 6 converts the rotational motion of the motor 5 into a linear motion. That is, the drive mechanism 6 moves the moving part 8_1 and the moving part 8_2 relative to the X-axis direction, in accordance with the rotational force of the motor 5.

The drive mechanism 6 has a self-locking function of restricting the movement of the grasping part 7 with the energization of the motor 5 stopped. Specifically, the drive mechanism 6 prevents the moving parts 8_1 and 8_2 from moving in a direction of the moving parts 8_1 and 8_2 releasing the grasped target object 200, that is, in a direction of separating the moving parts 8_1 and 8_2 from each other, with the energization of the motor 5 stopped. For example, in the drive mechanism 6, the self-locking function is realized by an inversion prevention mechanism using a known worm gear.

As described above, the drive mechanism 6 converts the rotational motion transmitted from the motor 5 into linear motion for moving the moving parts 8_1 and 8_2 (the finger parts 9_1 and 9_2) of the grasping part 7 coupled to the drive mechanism 6 in the X-axis direction. For example, when the motor 5 rotates in a predetermined direction, the drive mechanism 6 moves the moving part 8_1 to the positive side in the X-axis direction and moves the moving part 8_2 to the negative side in the X-axis direction. That is, the moving part 8_1 and the moving part 8_2 move in a direction approaching each other toward the center position P. This reduces the gap between the moving part 8_1 and the moving part 8_2, and the target object 200 can be sandwiched and grasped between the finger part 9_1 fixed to the moving part 8_1 and the finger part 9_2 fixed to the moving part 8_2.

For example, when the motor 5 rotates in a direction opposite to the predetermined direction, the drive mechanism 6 moves the moving part 8_1 to the negative side in the X-axis direction, and moves the moving part 8_2 to the positive side in the X-axis direction. That is, the moving part 8_1 and the moving part 8_2 move from the center position P in directions away from each other. This increases the gap between the moving part 8_1 and the moving part 8_2, and thus, the target object 200 grasped between the finger part 9_1 fixed to the moving part 8_1 and the finger part 9_2 fixed to the moving part 8_2 can be released.

Note that the grasping of the target object 200 by the grasping part 7 is not limited to the method of sandwiching the target object 200 between the finger part 9_1 and the finger part 9_2. For example, when the target object 200 has an annular shape, the finger parts 9_1 and 9_2 may each be inserted into an inner peripheral side of the target object 200 having the annular shape, and the target object 200 may be grasped by moving the finger parts 9_1 and 9_2 in directions away from each other from the inner peripheral side toward an outer peripheral side of the target object 200.

The motor drive control device 2 is a device driving the motor 5. Configurations of the motor 5 and the motor drive control device 2 will be described below with reference to the drawings.

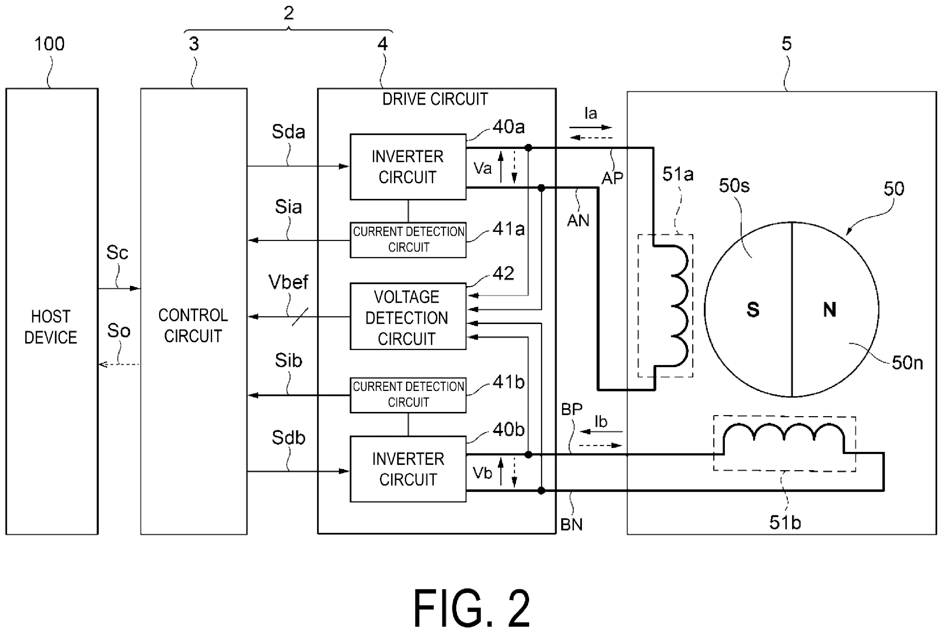

FIG. 2 is a diagram schematically illustrating a configuration of the motor 5 and the motor drive control device 2 in the grasping apparatus 1 according to the embodiment.

As described above, the motor 5 is a two-phase stepping motor. For example, as illustrated in FIG. 2, the motor 5 includes a rotor 50, a coil 51a of the A-phase, a coil 51b of the B-phase, and a two-phase stator (not illustrated).

Each of the coils 51a and 51b is an element exciting the stator (not illustrated). The coil 51a includes a terminal AP of a positive electrode and a terminal AN of a negative electrode. The coil 51b includes a terminal BP of a positive electrode and a terminal BN of a negative electrode. The terminal AP and the terminal AN of the coil 51a and the terminal BP and the terminal BN of the coil 51b are respectively connected to inverter circuits 40a and 40b forming a drive circuit 4.

The coils 51a and 51b are driven by the inverter circuits 40a and 40b. Thus, currents Ia and Ib having different phases from each other flow through the coils 51a and 51b. For example, the currents Ia and Ib having phases shifted from each other by 90° flow through the coils 51a and 51b.

Note that, in the following description, when not being individually distinguished, the coil 51a and the coil 51b may simply be denoted as a "coil 51".

The rotor 50 includes a permanent magnet subjected to single-pole magnetization or multipolar magnetization along a circumferential direction such that an S-pole 50s and an N-pole 50n are alternately inverted. Note that, in FIG. 2, a case of the rotor 50 having two poles is illustrated as an example.

The stator (not illustrated) is arranged in the periphery of the rotor 50 in proximity to an outer circumferential part of the rotor 50. When the phases of the currents Ia and Ib flowing respectively through the coils 51a and 51b are periodically switched, the rotor 50 rotates. An output shaft (not illustrated) is connected to the rotor 50, and the output shaft is driven by the rotational force of the rotor 50. The drive mechanism 6 is coupled to the output shaft.

As illustrated in FIG. 2, the motor drive control device 2 communicates with a host device 100, for example. The motor drive control device 2 controls the energization state of the coils 51a and 51b of the respective phases of the motor 5, based on a drive command signal Sc received from the host device 100, to control the rotation and stopping of the motor 5, and thus, control the operation of the entire grasping apparatus 1. When the motor drive control device 2 drives the motor 5, the rotational force of the motor 5 is transmitted to the grasping part 7 via the drive mechanism 6 connected to the output shaft of the motor 5, as described above. Accordingly, control of the grasping and releasing of the target object 200 by the grasping part 7 is performed.

As illustrated in FIG. 2, the motor drive control device 2 includes a control circuit 3 and the drive circuit 4, for example.

The control circuit 3 respectively generates a drive control signal Sda for exciting the coil 51a of the A-phase of the motor 5 and a drive control signal Sdb for exciting the coil 51b of the B-phase of the motor 5, based on the drive command signal Sc transmitted from the host device 100, and supplies the generated drive control signals Sda and Sdb to the drive circuit 4, to rotate the motor 5 to a target rotational position. In the following description, when the drive control signal Sda and the drive control signal Sdb are not distinguished from each other, the drive control signal Sda and the drive control signal Sdb are denoted as a "drive control signal Sd". Note that the control circuit 3 will be described in detail later.

The drive circuit 4 is a circuit driving the motor 5 by supplying a current to the motor 5, based on the drive control signal Sd. For example, the drive circuit 4 includes the inverter circuits 40a and 40b, current detection circuits 41a and 41b, and a voltage detection circuit 42.

The inverter circuits 40a and 40b supply drive power to the motor 5, based on the drive control signals Sda and Sdb. For example, the inverter circuits 40a and 40b are provided corresponding to the coils 51a and 51b to be driven. For example, as illustrated in FIG. 2, the inverter circuit 40a for driving the coil 51a of the A-phase and the inverter circuit 40b for driving the coil 51b of the B-phase are provided. The inverter circuits 40a and 40b are formed by an H-bridge circuit, for example.

As illustrated in FIG. 2, the inverter circuit 40a is connected to the terminal AP of the positive electrode of the coil 51a of the A-phase and the terminal AN of the negative electrode of the coil 51a. The inverter circuit 40b is connected to the terminal BP of the positive electrode of the coil 51b of the B-phase and the terminal BN of the negative electrode of the coil 51b.

The inverter circuit 40a applies a voltage Va between the terminal AP and the terminal AN, based on the drive control signal Sda output from the control circuit 3, and thus, causes the current Ia to flow through the coil 51a. The inverter circuit 40b applies a voltage Vb between the terminal BP and the terminal BN, based on the drive control signal Sdb output from the control circuit 3, and thus, causes the current Ib to flow through the coil 51b.

For example, as illustrated in FIG. 2, during an "A-phase (+) excitation period" with a current +Ia flowing from the terminal AP to the terminal AN of the coil 51a of the A-phase, for example, the inverter circuit 40a applies a voltage of "+Va" to the terminal AP with respect to the terminal AN of the coil 51a. On the other hand, during an "A-phase (-) excitation period" with a current -Ia flowing from the terminal AN to the terminal AP of the coil 51a of the A-phase, the inverter circuit 40a applies a voltage of "-Va" to the terminal AP with respect to the terminal AN of the coil 51a. During a "B-phase (+) excitation period" with a current +Ib flowing from the terminal BP to the terminal BN of the coil 51b of the B-phase, for example, the inverter circuit 40b applies a voltage of "+Vb" to the terminal BP with respect to the terminal BN of the coil 51b. During a "B-phase (-) excitation period" with a current -Ib flowing from the terminal BN to the terminal BP of the coil 51b of the B-phase, the inverter circuit 40b applies a voltage of "-Vb" to the terminal BP with respect to the terminal BN of the coil 51b.

The current detection circuits 41a and 41b are circuits detecting the currents Ia and Ib flowing through the coils 51a and 51b. For example, the current detection circuits 41a and 41b include shunt resistors. For example, the shunt resistor is provided for each of the coils 51a and 51b, and is connected in series with the inverter circuits 40a and 40b at the ground potential side or the power source voltage side of the inverter circuits 40a and 40b. The current detection circuit 41a at the A-phase side outputs a voltage at both ends the shunt resistor as a current detection signal Sia representing a measurement value of the coil current Ia of the A-phase. The current detection circuit 41b at the B-phase side outputs a voltage at both ends of the shunt resistor as a current detection signal Sib representing a measurement value of the coil current Ib of the B-phase.

The voltage detection circuit 42 is a circuit detecting the voltage of the coils 51a and 51b of the motor 5. For example, the voltage detection circuit 42 detects the voltages of the terminal AP of the positive electrode and the terminal AN of the negative electrode in the coil 51a of the A-phase, converts the detected voltages into voltages Vap and Van having magnitudes inputtable to the control circuit 3, and outputs the voltages Vap and Van. Similarly, the voltage detection circuit 42 detects the voltages of the terminal BP of the positive electrode and the terminal BN of the negative electrode in the coil 51b of the B-phase, converts the detected voltages into voltages Vbp and Vbn having magnitudes inputtable to the control circuit 3, and outputs the voltages Vbp and Vbn. The voltage detection circuit 42 includes a known circuit such as a resistive voltage divider circuit. The voltages Vap, Van, Vbp, and Vbn output from the voltage detection circuit 42 may be collectively referred to as a voltage Vbef.

The voltage detection circuit 42 may include an analog/digital conversion circuit. For example, the voltage detection circuit 42 may convert each of the detected voltages Vap, Van, Vbp, and Vbn into a digital signal and output the digital signal.

The control circuit 3 is a circuit generating, based on the drive command signal Sc from the host device 100, the drive control signal Sd for controlling the drive of the motor 5. Here, the drive command signal Sc includes information indicating a target drive state of the motor 5. For example, the drive command signal Sc includes information designating a rotation speed of the motor 5, information designating a target rotational angle (target rotational position) of the motor 5, and the like. For example, the information designating the target rotational position may be information designating the number of drive steps (the number of pulses) of the motor 5 corresponding to the amount of movement (target amount of movement) to the target rotational position.

For example, the control circuit 3 includes constituent elements (hardware elements) including a processor such as a central processing unit (CPU), various types of memories such as a read only memory (ROM) and a random access memory (RAM), a timer, a counter, an A/D conversion circuit, an input-output I/F circuit, a clock generation circuit and the like, and is a program processing device (for example, a micro control unit (MCU)). In this program processing device, constituent elements are connected to each other via a bus or a dedicated line. For example, the control circuit 3 includes a rewritable nonvolatile storage device such as a flash memory and an electrically erasable programmable read-only memory (EEPROM) as a memory. For example, a first value I1 and a second value I2 settable as a reference current value Ith, a step-out determination threshold value Vth, a grasp determination threshold value dDth, and the like, to be described later, are rewritable in the above-described nonvolatile storage device.

Note that, in the present embodiment, the control circuit 3 is packaged as, for example, an integrated circuit (IC), but is not limited to this configuration. The control circuit 3 and the drive circuit 4 may be packaged together.

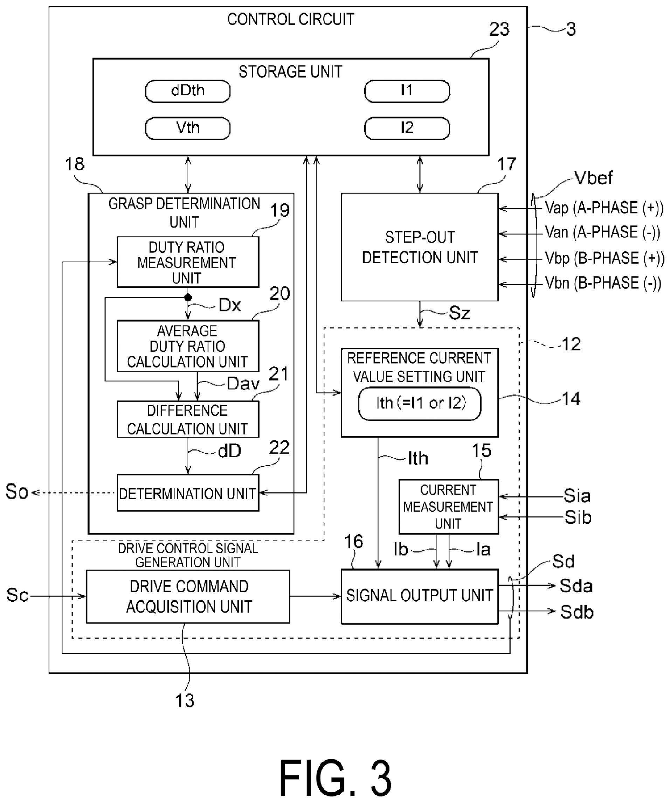

The control circuit 3 has a function of controlling an operation of grasping the target object 200 and an operation of releasing the target object 200 by the grasping part 7 by switching the energization of the coils 51a and 51b of the motor 5. The control circuit 3 has a function of assisting the self-locking function of the drive mechanism 6 by controlling the motor 5 so as to fix the rotor 50 of the motor 5 with the target object 200 grasped. Furthermore, the control circuit 3 has a function of determining whether the target object 200 is grasped by the grasping part 7 by monitoring a change in a duty ratio of a PWM signal as the drive control signal Sd. A specific configuration example of the control circuit 3 for achieving these functions will be described in detail below with reference to FIG. 3.

FIG. 3 is a block diagram illustrating a configuration of the control circuit 3 in the grasping apparatus 1 according to the embodiment.

The control circuit 3 includes a drive control signal generation unit 12, a step-out detection unit 17, a grasp determination unit 18, and a storage unit 23 as functional blocks for enabling the above-described functions. For example, the above-described processor in the MCU executes various types of calculations in accordance with a program stored in a memory, and controls a peripheral circuit such as a timer and a counter, an A/D conversion circuit, and an input-output I/F circuit, and thus, these functional blocks are achieved. Note that a part or all of these functional blocks may be achieved by a dedicated hardware circuit. The control circuit 3 may include a functional block for realizing another function, in addition to the above-described functions.

The storage unit 23 is a functional unit for storing data necessary for comprehensive control of the grasping apparatus 1 by the control circuit 3, and the like. For example, the storage unit 23 stores the first value I1 and the second value I2 being information relating to the reference current value Ith serving as a reference for switching the energization of the coil 51 of the motor 5, information about the step-out determination threshold value Vth serving as a reference for detecting the occurrence of step-out of the motor 5, information about a grasp determination threshold value dDth serving as a reference for determining whether the target object 200 is grasped by the grasping part 7, and the like. Note that these pieces of information will be described in detail later.

The step-out detection unit 17 is a functional unit detecting the step-out of the motor 5.

Specifically, the step-out detection unit 17 determines whether step-out of the motor 5 occurs, based on the step-out determination threshold value Vth stored in the storage unit 23 and the back electromotive voltage generated in the coils 51a and 51b of the motor 5. When detecting the step-out of the motor 5, the step-out detection unit 17 outputs a step-out detection signal Sz.

Here, a method used by the step-out detection unit 17 in the step-out determination to measure the back electromotive voltage of the coils 51a and 51b of the motor 5 will be described.

In general, when a stepping motor is rotating, a back electromotive voltage is generated in the coil of the non-excited phase. For example, when the stepping motor is driven by a one-phase excitation method, a back electromotive voltage is generated in the coil 51b of the B-phase being the non-excited phase, during an A-phase excitation period having the coil 51a of the A-phase excited. On the other hand, during a B-phase excitation period having the coil 51b of the B-phase excited, a back electromotive voltage is generated in the coil 51a of the A-phase being a non-excited phase.

Therefore, the step-out detection unit 17 monitors the voltage between the terminal AP and the terminal AN as a back electromotive voltage Vapn of the coil 51a, based on the voltages Vap and Van detected by the voltage detection circuit 42 in the period having the coil 51a of the A-phase not excited. Similarly, the step-out detection unit 17 monitors the voltage between the terminal BP and the terminal BN as a back electromotive voltage Vbpn of the coil 51b, based on the voltages Vbp and Vbn detected by the voltage detection circuit 42 in the period having the coil 51b of the B-phase not excited.

In general, in a stepping motor, a back electromotive voltage generated in a non-excited coil when step-out occurs is smaller than a back electromotive voltage generated in the non-excited coil when the stepping motor operates normally. Therefore, the step-out detection unit 17 compares the back electromotive voltages Vapn and Vbpn with the step-out determination threshold value Vth stored in the storage unit 23. The step-out detection unit 17 determines that step-out occurs in the motor 5 and outputs the step-out detection signal Sz when the back electromotive voltages Vapn and Vbpn are smaller than the step-out determination threshold value Vth, and determines that step-out does not occur in the motor 5 when the back electromotive voltages Vapn and Vbpn are equal to or greater than the step-out determination threshold value Vth.

The method of determining the step-out by the step-out detection unit 17 is not limited to the above-described example, and other known methods can be adopted. For example, the rotation speed of the motor 5 may be monitored while the motor 5 is driven, and it may be determined that step-out occurs when the rotation speed is lower than a predetermined threshold value.

The drive control signal generation unit 12 is a functional unit generating the drive control signal Sd (Sda and Sdb). Based on the drive command signal Sc, the drive control signal generation unit 12 generates the drive control signals Sda and Sdb so as to switch the coil 51a of the A-phase and the coil 51b of the B-phase between an excited state and a non-excited state at a predetermined timing based on a predetermined excitation method, in order to move the rotor 50 of the motor 5 to the target rotational position (by the target amount of movement). For example, the predetermined excitation method is any one of a one-phase excitation method, a one-two-phase excitation method, a two-phase excitation method, and a microstep method.

When the drive command signal Sc for instructing drive of the grasping part 7 is input, the drive control signal generation unit 12 generates the drive control signals Sda and Sdb for driving the grasping part 7 so that the grasping part 7 grasps the target object 200.

When the step-out detection unit 17 detects the step-out of the motor 5, the drive control signal generation unit 12 generates the drive control signals Sda and Sdb for supplying, to the motor 5, a current smaller than the current supplied to the motor 5 before the detection of the step-out, so as to fix the rotor 50 of the motor 5. Specifically, when the step-out is detected by the step-out detection unit 17, the drive control signal generation unit 12 generates the drive control signals Sda and Sdb by a two-phase excitation method of exciting both of the coils 51a and 51b of the two phases, for example, and fixes the rotor 50 of the motor 5. For example, when the step-out detection unit 17 detects the step-out, the drive control signal generation unit 12 rotates the rotor 50 by one step by the two-phase excitation method, and then, fixes the rotor 50. Here, one step is a unit of control for driving the motor 5.

Here, the drive control signals Sda and Sdb are PWM signals, for example. In the present embodiment, one period of a PWM signal, that is, a period of generating one PWM signal, is also referred to as a "PWM period".

For example, the drive control signal generation unit 12 includes a drive command acquisition unit 13, a reference current value setting unit 14, a current measurement unit 15, and a signal output unit 16.

The drive command acquisition unit 13 is a functional unit acquiring and analyzing information included in the drive command signal Sc transmitted from the host device 100 and issuing an instruction to the signal output unit 16. For example, when the drive command signal Sc including information for instructing the grasping of the target object 200 is input to the control circuit 3, the drive command acquisition unit 13 instructs the reference current value setting unit 14 and the signal output unit 16 to generate the drive control signal Sd so as to rotate the motor 5 in a predetermined direction. Furthermore, for example, when the drive command signal Sc including information for instructing the release of the target object 200 is input to the control circuit 3, the drive command acquisition unit 13 instructs the reference current value setting unit 14 and the signal output unit 16 to generate the drive control signal Sd so as to rotate the motor 5 in a direction opposite to the predetermined direction.

Furthermore, when the step-out detection unit 17 determines the step-out, the drive command acquisition unit 13 instructs the reference current value setting unit 14 and the signal output unit 16 to fix the rotor 50 of the motor 5. For example, when the step-out detection signal Sz is output after the drive command signal Sc including information for instructing the grasping of the target object 200 is input to the control circuit 3 and an instruction for generating the drive control signal Sd so as to rotate the motor 5 in a predetermined direction is issued, the drive command acquisition unit 13 instructs the reference current value setting unit 14 to change the later-described reference current value Ith to the second value I2, and instructs the signal output unit 16 to fix the rotor 50.

The current measurement unit 15 is a functional unit calculating and outputting measurement values of the coil currents Ia and Ib of the respective phases, based on the current detection signals Sia and Sib output from the current detection circuits 41a and 41b. For example, when the current detection signals Sia and Sib are analog signals, the current measurement unit 15 converts the voltage of the current detection signal Sia into a digital value and outputs the digital value as the measurement value of the coil current Ia of the A-phase. The current measurement unit 15 converts the voltage of the current detection signal Sib into a digital value, and outputs the digital value as the measurement value of the coil current Ib of the B-phase. For example, the current measurement unit 15 outputs each of the measurement value of the coil current Ia of the A-phase and the measurement value of the coil current Ib of the B-phase for each PWM period.

Note that, when the current detection signals Sia and Sib output from the current detection circuits 41a and 41b are digital values, it is only required that the current measurement unit 15 outputs, as the measurement values of the coil currents Ia and Ib, the digital values of the current detection signals Sia and Sib.

The reference current value setting unit 14 is a functional unit setting the reference current value Ith serving as a reference of the current (the coil currents Ia and Ib of the respective phases) supplied to the motor 5.

For example, upon receiving, from the drive command acquisition unit 13, an instruction for generating the drive control signal Sd so as to rotate the motor 5 in a predetermined direction or in a direction opposite to the predetermined direction, the reference current value setting unit 14 sets the reference current value Ith to the first value I1 (Ith = I1). Information about the first value I1 is stored in the storage unit 23, for example.

The reference current value setting unit 14 may set the first value I1 as an initial value of the reference current value Ith during the activation of the grasping apparatus 1 (the control circuit 3).

When the step-out detection unit 17 detects the step-out of the motor 5, the reference current value setting unit 14 sets the reference current value Ith to the second value I2 being smaller than the first value I1 (Ith = I2). For example, the second value I2 is stored in the storage unit 23, similarly to the first value I1. Here, the second value I2 is preferably set to one tenth or less of the first value I1, for example. For example, when the first value I1 is 500 mA, the second value I2 may be set to 30 mA.

The signal output unit 16 generates a PWM signal having a predetermined period, in accordance with an instruction from the drive command acquisition unit 13, and outputs the PWM signal as the drive control signal Sd. Specifically, when the drive command acquisition unit 13 issues an instruction for rotating the motor 5 in a predetermined direction or in a direction opposite to the predetermined direction, the drive control signals Sda and Sdb are generated so that the excited phase is periodically switched (the coils 51a and 51b are commutated), based on a predetermined excitation method. When the drive command acquisition unit 13 issues an instruction for fixing the rotor 50 of the motor 5, the drive control signals Sda and Sdb for exciting both of the coils 51a and 51b of the two phases so that the rotor 50 does not rotate by the two-phase excitation method, are generated.

Specifically, the signal output unit 16 generates the drive control signal Sd by the method described below.

The signal output unit 16 compares, in each PWM period, the measurement values of the coil currents Ia and Ib acquired by the current measurement unit 15 with the reference current value Ith set by the reference current value setting unit 14. For example, in an A-phase excitation period, the signal output unit 16 starts comparison processing between the measurement value of the coil current Ia and the reference current value Ith at a timing when one PWM period is started. When the measurement value of the coil current Ia is lower than the reference current value Ith, the signal output unit 16 sets the drive control signal Sda to a first logic level (for example, a high level), and when the measurement value of the coil current Ia is equal to or greater than the reference current value Ith, the signal output unit 16 sets the drive control signal Sda to a second logic level (for example, a low level) being an opposite level of the first logic level. Afterwards, the signal output unit 16 maintains the drive control signal Sda at the second logic level until the PWM period ends, regardless of the magnitude relationship between the measurement value of the coil current Ia and the reference current value Ith. When one PWM period ends and the next PWM period starts, the signal output unit 16 starts the comparison processing between the measurement value of the coil current Ia and the reference current value Ith again to generate the drive control signal Sda (PWM signal) of the next period.

Similarly, in a B-phase excitation period, the signal output unit 16 performs, in each PWM period, comparison processing between the measurement value of the coil current Ib and the reference current value Ith, to generate a PWM signal as the drive control signal Sdb.

Thus, the signal output unit 16 repeatedly performs the comparison processing between the coil currents Ia and Ib of the respective phases and the reference current value Ith in each PWM period of the respective phases, and thus, generates the PWM signals as the drive control signals Sda and Sdb. For example, the inverter circuit 40a excites the coil 51a to be driven, when the input drive control signal Sda is at the first logic level (for example, a high level), and regenerates the coil 51a to be driven without exciting the coil 51a, when the drive control signal Sda is at the second logic level (for example, a low level). Similarly, for example, the inverter circuit 40b excites the coil 51b to be driven, when the input drive control signal Sdb is at the first logic level (for example, a high level), and regenerates the coil 51b to be driven without exciting the coil 51b, when the drive control signal Sdb is at the second logic level (for example, a low level).

This makes it possible to drive the motor 5 while the coil currents Ia and Ib of the motor 5 are limited so as not to exceed the reference current value Ith.

The grasp determination unit 18 is a functional unit determining whether the target object 200 is grasped by the grasping part 7. The grasp determination unit 18 determines whether the target object 200 is grasped by the grasping part 7, based on the amount of change in the duty ratio of the PWM signal serving as the drive control signals Sda and Sdb.

A method of determining, by the grasp determination unit 18, whether the target object 200 is grasped will be described below.

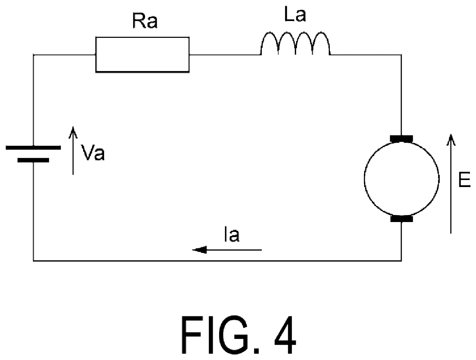

FIG. 4 is a diagram illustrating an equivalent circuit in a periphery of the motor 5 when a rotor 50 of the motor 5 is fixed.

FIG. 4 illustrates an equivalent circuit in a periphery of a coil La of the A-phase as an example. In FIG. 4, La represents the inductance of the coil 51a of the A-phase, Ra represents the resistance component of the coil 51a, Va represents the voltage across the coil La, and E represents the back electromotive voltage generated in the coil La.

As described above, after the target object 200 is grasped, the drive control signal generation unit 12 excites the coil 51a of the A-phase and the coil 51b of the B-phase by the two-phase excitation method to fix (lock) the rotor 50, and generates the drive control signals Sda and Sdb such that the coil currents Ia and Ib do not exceed the reference current value Ith (= I2) (such that the coil currents Ia and Ib are constant). In the period when the rotor 50 is fixed, the coil current Ia does not change in the coil 51a of the A-phase, and thus, the back electromotive voltage is not generated (E = 0). Therefore, Equation (1) below is obtained.$Va = Ra \times Ia$ (1)

As described above, in the period when the rotor 50 is fixed, the motor 5 is excited by two-phase excitation. Therefore, when the grasped target object 200 falls off, the position of the rotor 50 changes, and a back electromotive voltage is generated in the coils 51a and 51b. On the other hand, in this period, the coil current Ia is controlled so as not to exceed the reference current value Ith (= I2) (so as to be constant). Therefore, even when the grasped target object 200 falls off, the coil current Ia is maintained constant, and thus, Equation (2) is obtained.
[Mathematical Expression 2]$Va = Ra \times Ia + E$ (2)

Here, the voltage Va across the coil 51a is expressed by Equation (3) below, where Dx is the duty ratio of the drive control signal Sda and Vsource is the power source voltage supplied to the inverter circuits 40a and 40b.
[Mathematical Expression 3]$Va = Vsource \times Dx$ (3)

From Equations (2) and (3) mentioned above, the duty ratio Dx of the drive control signal Sda is expressed by Equation (4) below.
[Mathematical Expression 4]$Dx = \frac{Ra \times Ia + E}{Vsource}$ (4)

As described above, when the target object 200 is grasped, the back electromotive voltage is E = 0, and when the grasped target object 200 falls off, the back electromotive voltage is E ≠ 0. Therefore, it is understood from Equation (4) that the duty ratio Dx of the drive control signal Sda changes due to the change in the back electromotive voltage E before and after the falling of the target object 200.

Thus, with the PWM signal serving as the drive control signals Sda and Sdb generated so as to fix the rotor 50, the grasp determination unit 18 determines that the grasping of the target object 200 by the grasping part 7 is released when the amount of change in the duty ratio of the PWM signal of one period with respect to the duty ratio of the PWM signal of the period before the one period is greater than a threshold value.

More specifically, the grasp determination unit 18 includes a duty ratio measurement unit 19, an average duty ratio calculation unit 20, a difference calculation unit 21, and a determination unit 22.

The duty ratio measurement unit 19 measures the duty ratio Dx of the PWM signal as the drive control signal Sd. For example, the duty ratio measurement unit 19 measures the duty ratio Dx of the drive control signal Sd in each PWM period (one period), and stores the duty ratio Dx in the storage unit 23. Note that, when the motor 5 is driven by two-phase excitation, it is only required to measure the duty ratio of at least one of the drive control signal Sda of the A-phase or the drive control signal Sdb of the B-phase. The storage unit 23 stores measurement values of the duty ratio for a plurality of periods necessary to calculate an average duty ratio described later.

The average duty ratio calculation unit 20 calculates an average value Dav of the duty ratio in a plurality of PWM periods, based on the measurement result of the duty ratio by the duty ratio measurement unit 19. For example, when one PWM period is started, the average duty ratio calculation unit 20 calculates the average value (average duty ratio) Dav of the duty ratios of the drive control signal Sd in a plurality of PWM periods (for example, 10 periods) before the PWM period, and stores the average value Dav in the storage unit 23. Note that a known calculation method for calculating an average value can be adopted as a method of calculating the average duty ratio Dav.

The difference calculation unit 21 calculates a difference dD between the average duty ratio Dav of the duty ratio of the drive control signal Sd and the duty ratio Dx of the drive control signal Sd. For example, the difference calculation unit 21 stores, as the difference dD in the storage unit 23, an absolute value of a value obtained by dividing the duty ratio Dx from the average duty ratio Dav (= |Dav - Dx|).

The determination unit 22 compares the difference dD with the grasp determination threshold value dDth with the drive control signal Sd generated so as to fix the rotor 50. The grasp determination threshold value dDth is a threshold value for determining whether the grasping part 7 is grasping the target object 200, and is stored in the storage unit 23.

For example, when the difference dD is greater than the grasp determination threshold value dDth, the determination unit 22 determines that the grasping of the target object 200 by the grasping part 7 is released. When the difference dD is equal to or less than the grasp determination threshold value dDth, the determination unit 22 determines that the target object 200 is grasped by the grasping part 7. Note that the determination unit 22 may transmit, to the host device 100, a determination signal So indicating whether the target object 200 is grasped.

Next, a processing flow when the grasping apparatus 1 grasps the target object 200 will be described.

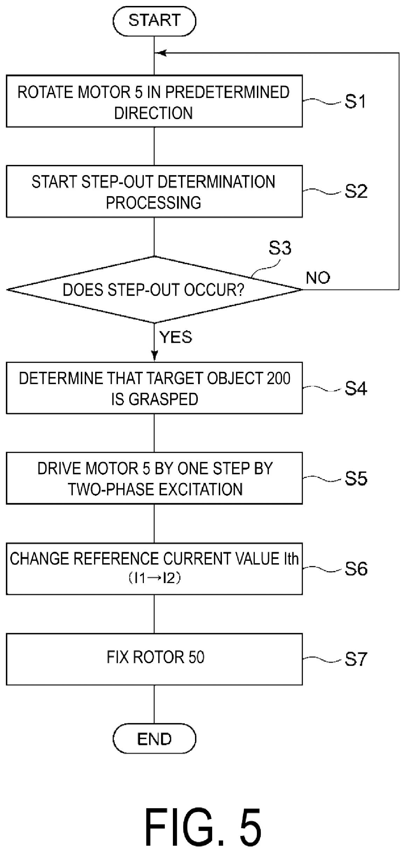

FIG. 5 is a flowchart illustrating a processing flow by the motor drive control device 2 when the grasping apparatus 1 grasps the target object 200 in the embodiment.

After the grasping apparatus 1 is activated, in the motor drive control device 2, the reference current value setting unit 14 of the drive control signal generation unit 12 sets the reference current value Ith to the first value I1 (Ith = I1). Subsequently, for example, when the drive command signal Sc including information for instructing to grasp the target object 200 is input to the motor drive control device 2, the motor drive control device 2 starts the drive of the motor 5 for grasping the target object 200.

First, the motor drive control device 2 drives the motor 5 so as to cause the motor 5 (rotor 50) to rotate in a predetermined direction (step S1). Specifically, the drive control signal generation unit 12 generates the drive control signal Sd so as to switch the coil 51a of the A-phase and the coil 51b of the B-phase between an excited state and a non-excited state at a timing based on a predetermined excitation method, and thus, the finger parts 9_1 and 9_2 of the grasping part 7 move toward the center position P.

The motor drive control device 2 starts the drive of the motor 5 and starts determination processing of the step-out of the motor 5 (step S2). Specifically, the step-out detection unit 17 starts processing of determining whether step-out occurs.

The step-out detection unit 17 uses the above-described method to determine whether step-out occurs in the motor 5 (step S3). When it is not detected that step-out occurs (step S3: NO), the motor drive control device 2 continuously rotates the motor 5 in the predetermined direction (step S1).

On the other hand, when it is detected that step-out occurs (step S3: YES), the motor drive control device 2 determines that the target object 200 is grasped by the grasping part 7 (step S4). Next, the motor drive control device 2 starts motor drive control for assisting the self-locking function of the drive mechanism 6, in order to maintain the state where the target object 200 is grasped by the grasping part 7.

Specifically, first, the drive control signal generation unit 12 generates the drive control signals Sda and Sdb by a two-phase excitation method so as to rotate the rotor 50 of the motor 5 by one step (step S5). Accordingly, the maximum torque of the motor 5 is exerted, and thus, the grasping part 7 can reliably grasp the target object 200. Next, the drive control signal generation unit 12 uses the reference current value setting unit 14 to change the reference current value Ith to the second value I2 (step S6). Subsequently, the drive control signal generation unit 12 generates the drive control signals Sda and Sdb for exciting both the coil 51a of the A-phase and the coil 51b of the B-phase so as to fix the rotor 50 (step S7). Accordingly, the rotor 50 of the motor 5 is fixed (rotor locking function) in addition to the self-locking function by the drive mechanism 6, and thus, it is possible to further stabilize the state where the target object 200 is grasped by the grasping part 7.

Next, a processing flow in the grasping apparatus 1 after grasping the target object 200 will be described.

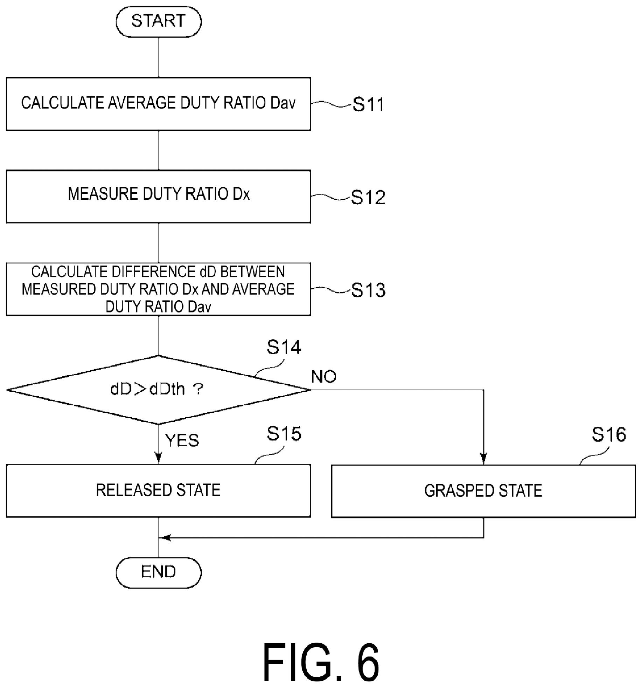

FIG. 6 is a flowchart illustrating a processing flow by the motor drive control device 2 after the grasping apparatus 1 grasps the target object 200 in the embodiment.

In the grasping apparatus 1, with the target object 200 grasped by the self-locking function of the drive mechanism 6 and the rotor locking function of the motor 5, the motor drive control device 2 executes grasp determination processing of determining whether the target object 200 is grasped by the grasping part 7.

Specifically, first, the average duty ratio calculation unit 20 of the grasp determination unit 18 uses the above-described method to calculate the average value (average duty ratio) Dav of the duty ratio of the drive control signal Sd in a plurality of PWM periods before the current PWM period (step S11).

Next, the duty ratio measurement unit 19 of the grasp determination unit 18 measures the duty ratio Dx of the drive control signal Sd at this time (step S12). The drive control signal having a duty ratio to be measured in step S11 and step S12 may be the drive control signal Sd corresponding to the coil 51 being excited. That is, in the present embodiment, both the coil 51a of the A-phase and the coil 51b of the B-phase are excited. Therefore, it is only required to measure the duty ratio of at least one of the drive control signal Sda of the A-phase or the drive control signal Sdb of the B-phase, and calculate the average value of the measured duty ratio.

Next, the difference calculation unit 21 of the grasp determination unit 18 uses the above-described method to calculate the difference ΔdD between the duty ratio Dx measured in step S12 and the average duty ratio Dav calculated in step S11 (step S13).

Subsequently, the determination unit 22 of the grasp determination unit 18 compares the difference ΔdD calculated in step S13 with the grasp determination threshold value dDth (step S14). When the difference ΔdD is equal to or smaller than the grasp determination threshold value dDth (NO in step S14), the determination unit 22 determines that the target object 200 is grasped by the grasping part 7 (step S16). Afterwards, the motor drive control device 2 returns to step S1 and executes again the above-described grasp determination processing.

On the other hand, when the difference ΔdD is greater than the grasp determination threshold value dDth (step S14: YES), the determination unit 22 determines that the target object 200 is in a state after falling from the grasping part 7 (a released state) (step S15). Afterwards, the motor drive control device 2 transmits, to the host device 100, the determination signal So indicating that the grasped target object 200 has fallen off, for example.

As described above, the grasping apparatus 1 according to the embodiment includes the grasping part 7 for grasping the target object 200, the drive mechanism 6 driving the grasping part 7 in accordance with the rotational force of the motor 5 and having a self-locking function of restricting the movement of the grasping part 7 with the energization of the motor 5 stopped, and the motor drive control device 2 driving the motor 5. As described above, when the drive command signal Sc for instructing drive of the grasping part 7 is input, the motor drive control device 2 drives the motor 5 so that the grasping part 7 grasps the target object 200, and when the step-out of the motor 5 is detected, the motor drive control device 2 supplies, to the motor 5, a current smaller than the current supplied to the motor 5 before the detection of the step-out, to fix the rotor 50 of the motor 5.

Accordingly, as described above, by detecting the step-out of the motor 5 after the grasping part 7 starts an operation of grasping the target object 200, it is possible to detect that the target object 200 is grasped by the grasping part 7. After the step-out is detected, the rotor 50 of the motor 5 is fixed, and thus, the self-locking function of the drive mechanism 6 can be assisted, so that the target object 200 can be grasped more stably. That is, according to the grasping apparatus 1 according to the present embodiment, it is possible to reliably prevent the grasped target object 200 from falling off.

Furthermore, by setting the current supplied to the motor 5 when the rotor 50 is fixed after the step-out is detected, to a value smaller than the current when the rotor 50 is rotated, it is possible to assist the self-locking function while suppressing power consumption.

In the grasping apparatus 1, as described above, when the rotor 50 is fixed after the step-out is detected, the motor drive control device 2 excites both of the coils 51a and 51b of the two phases of the motor 5 being a stepping motor (two-phase excitation). Accordingly, the rotor 50 can be fixed by generating a greater torque in the motor 5, and thus, it is possible to more reliably prevent the grasped target object 200 from falling off.

As described above, with the drive control signal Sd generated so as to fix the rotor 50, when the amount of change in the duty ratio of one period of a PWM signal as the drive control signal Sd with respect to the duty ratio of the period before the one period is greater than the grasp determination threshold value, the motor drive control device 2 determines that the grasping of the target object 200 by the grasping part 7 is released.

In a conventional grasping apparatus such as an electric gripper, when a stepping motor in the grasping apparatus is controlled in an open loop, it is difficult to detect that a target object falls from the grasping apparatus. In order to detect that the target object falls off, it is necessary to separately provide a sensor such as a load cell.

In contrast, as described above, when the self-locking function of the drive mechanism 6 is operating, the grasping apparatus 1 according to the present embodiment monitors the duty ratio of the PWM signal while driving the motor 5 by the PWM signal (the drive control signal Sd) so as to fix the rotor 50, and determines whether the amount of change in the duty ratio is greater than the grasp determination threshold value. Accordingly, it is possible to detect whether the target object 200 has fallen off by detecting a change in the duty ratio of the PWM signal due to the back electromotive voltage generated when the grasped target object 200 has fallen off. Therefore, for example, even when the stepping motor is controlled in an open loop, it is not necessary to separately provide a sensor such as a load cell.

In the grasping apparatus 1, with the drive control signal Sd generated so as to fix the rotor 50, the motor drive control device 2 calculates the difference dD between the average value of the duty ratio (the average duty ratio Dav) of the PWM signal (the drive control signal Sd) in a plurality of periods and the duty ratio (Dx) of the PWM signal in one period, compares the difference dD with the grasp determination threshold value dDth, and determines that the grasping of the target object 200 by the grasping part 7 is released, when the difference dD is greater than the grasp determination threshold value dDth.

Accordingly, it is possible to reliably detect a change in the duty ratio of the PWM signal due to the back electromotive voltage generated when the grasped target object 200 has fallen off, and thus, it is possible to expect an improvement in the accuracy of detecting whether the grasped target object 200 has fallen off.

### Expansion of Embodiments

The invention made by the present inventor has been specifically described above based on the embodiments, but the present invention is not limited to the embodiments, and it goes without saying that the present invention can be changed in various ways within the scope not departing from the gist of the present invention.

For example, in the above-described embodiment, when the grasping part 7 is driven so as to grasp the target object 200 by the grasping part 7, in a case where the coil currents Ia and Ib are changed in the shape of a sinusoidal wave by a micro-step method to rotate the motor 5 in a predetermined direction, the first value I1 also changes in the shape of a sinusoidal wave. In this case, it is only required to set the second value I2 to a value sufficiently smaller than the maximum value obtainable as the first value I1 (the peak value of the sinusoidal wave).

The number of phases in the motor 5 (stepping motor) according to the above-described embodiment is not limited to two phases. Furthermore, the motor 5 is not limited to a stepping motor, and may be a brushless DC motor, for example.

Further, the above-described flowchart illustrates an example for describing the operation, and is not limited to this example. That is, the steps illustrated in the respective drawings of the flowchart are specific examples, and are not limited to this flow. For example, the order of some processing operations may be changed, other processing operations may be inserted between each processing operation, or some processing operations may be performed in parallel.

### Reference Signs List

1 Grasping apparatus, 2 Motor drive control device, 3 Control circuit, 4 Drive circuit, 5 Motor (stepping motor), 6 Drive mechanism, 7 Grasping part, 8_1, 8_2 Moving part, 9_1, 9_2 Finger part, 12 Drive control signal generation unit, 13 Drive command acquisition unit, 14 Reference current value setting unit, 15 Current measurement unit, 16 Signal output unit, 17 Step-out detection unit, 18 Grasp determination unit, 19 Duty ratio measurement unit, 20 Average duty ratio calculation unit, 21 Difference calculation unit, 22 Determination unit, 23 Storage unit, 40a, 40b Inverter circuit, 41a, 41b Current detection circuit, 42 Voltage detection circuit, 50 Rotor, 50s S-pole, 50n N-pole, 51a, 51b Coil, 100 Host device, 200 Target object, Dx Duty ratio, Dav Average duty ratio, dD Difference, Ia, Ib Coil current, Ith Reference current value, I1 First value, I2 Second value, Sc Drive command signal, Sd, Sda, Sdb Drive control signal, Sia, Sib Current detection signal, So Determination signal, Vap, Van, Vbp, Vbn, Vbef Voltage, Vth Step-out determination threshold value, 100 Host device.

## Claims

1. A grasping apparatus, comprising:
a motor;
a grasping part configured to grasp a target object;
a drive mechanism configured to drive the grasping part in accordance with a rotational force of the motor and including a self-locking function of restricting a movement of the grasping part with energization of the motor stopped; and
a motor drive control device configured to drive the motor, wherein
the motor drive control device includes a drive circuit configured to drive the motor by supplying a current to the motor, based on a drive control signal, and a control circuit configured to generate the drive control signal, based on a drive command signal,
the control circuit includes:
a drive control signal generation unit configured to generate the drive control signal; and
a step-out detection unit configured to detect a step-out of the motor, and
when the drive command signal including information instructing drive of the grasping part is input, the drive control signal generation unit generates the drive control signal for driving the grasping part to cause the grasping part to grasp the target object, and when the step-out detection unit detects the step-out of the motor, the drive control signal generation unit generates the drive control signal for supplying, to the motor, a current smaller than a current supplied to the motor before the detection of the step-out, to fix a rotor of the motor.

2. The grasping apparatus according to claim 1, wherein
the motor is a stepping motor including coils of two phases, and
the drive control signal generation unit generates the drive control signal by a two-phase excitation method of exciting both the coils of the two phases, to fix the rotor.

3. The grasping apparatus according to claim 2, wherein
when the step-out detection unit detects the step-out, the drive control signal generation unit rotates the rotor by one step by the two-phase excitation method and then fixes the rotor.

4. The grasping apparatus according to claim 1, wherein
the control circuit further includes
a grasp determination unit configured to determine whether the target object is grasped by the grasping part,
the drive control signal generation unit includes
a current measurement unit configured to measure a current supplied to the motor;
a reference current value setting unit configured to set a reference current value, being a reference of a current supplied to the motor, to a first value, and set the reference current value to a second value smaller than the first value, when the step-out detection unit detects the step-out; and
a signal output unit,
the signal output unit generates a PWM signal having a predetermined period, such that a current measured by the current measurement unit does not exceed the reference current value, and outputs the PWM signal as the drive control signal, and
with the drive control signal generated to fix the rotor, the grasp determination unit determines that grasping of the target object by the grasping part is released, when an amount of change of a duty ratio of the PWM signal of one period with respect to a duty ratio of the PWM signal of a period before the one period is greater than a threshold value.

5. The grasping apparatus according to claim 4, wherein
the grasp determination unit includes
a duty ratio measurement unit configured to measure a duty ratio of the PWM signal;
an average duty ratio calculation unit configured to calculate an average value of the duty ratios in a plurality of the periods;
a difference calculation unit configured to calculate a difference between the average value of the duty ratios and the duty ratio; and
a determination unit configured to compare the difference with the threshold value with the drive control signal generated to fix the rotor, and determine that the grasping of the target object by the grasping part is released, when the difference is greater than the threshold value.

6. A control method for a grasping apparatus including a motor, a grasping part configured to grasp a target object, a drive mechanism configured to drive the grasping part in accordance with a rotational force of the motor and including a self-locking function of restricting a movement of the grasping part with energization of the motor stopped, and a motor drive control device configured to drive the motor, the control method comprising:
a first step of driving the motor to cause the grasping part to grasp the target object;
a second step of determining whether a step-out occurs in the motor, when the motor is driven in the first step; and
a third step of, when the step-out is detected in the second step, fixing a rotor of the motor by supplying, to the motor, a current smaller than a current supplied to the motor when the motor is driven in the first step.
